# EUROPEAN PATENT SPECIFICATION

(11) **EP 0 639 417 B1**
(45) Date of publication and mention of the grant of the patent: **09.12.1998**
(21) Application number: 93905624.8
(22) Date of filing: 09.03.1993
(51) Int. Cl.: B22F 3/02, B22F 3/10

(54) **PROCESS FOR MANUFACTURING POWDER INJECTION MOLDED PARTS**
VERFAHREN ZUR HERSTELLUNG VON WERKSTÜCKEN MITTELS PULVERSPRITZEN
PROCEDE DE REALISATION DE PIECES MOULEES PAR INJECTION PAR TRANSFERT DE POUDRE

(43) Date of publication of application: 22.02.1995
(73) Proprietor: CITIZEN WATCH CO. LTD., Shinjuku-Ku Tokyo 163-04 (JP)
(72) Inventor: KASAI, Takao, Tokorozawa-shi, Saitama 359 (JP); YOSHIKAWA, Kenichi, Shibuya-ku, Tokyo 150 (JP); SAITO, Shigeru, Saitama 357 (JP); HOSHI, Masami, Nerima-ku, Tokyo 179 (JP)
(74) Representative: Kraus, Walter, Dr.
(86) International application number: JP9300288
(87) International publication number: WO9420242

(56) References cited:
- EP-A- 0 379 777
- DE-A- 3 611 271
- JP-A- 1 159 304
- JP-A- 1 240 602
- US-A- 5 021 208

## Description

### Technical Field

This invention relates to a method of manufacturing parts by powder injection molding, and more particularly, relates to a method of removing binder from a molded body during manufacturing the part by the above manufacturing method.

### Background Art

Powder injection molding is a method capable of producing parts having a three-dimensionally complicated form accurately as well as efficiently. Characteristics of this manufacturing method are in the introduction of the injection molding method used for plastic into conventional powder metallurgy. Compared with conventional powder metallurgy, this method requires a large quantity of binder, and the binder having a low viscosity at high temperature is used. Accordingly, the result of the debinding process for removing this influences quality and productivity thereof. Thereupon, the binder used in powder injection molding must satisfy high fluidity of powder-binder complex required in the injection molding process, and must satisfy debinding rate and shape retention required in the debinding process. Particularly, low melting point binder, such as carnauba wax, paraffin wax, polyethylene wax and stearic acid, is essential for a binder composition for powder injection molding, because of not only improving uniform filling ability of a complex form part due to the improvement in fluidity in the injection molding process, and exercising an excellent effect of demolding from a forming mold, but also not varying the blended amount of binder in a molded body due to its high evaporation point. However, the method of removing waxes, which are low melting components, from a powder injection molded body efficiently without forming defects was accompanied with difficulties.

As the debinding method of injection molded parts, vacuum dewaxing and solvent extraction have been proposed in addition to conventional thermal decomposition. However, these methods are unsatisfactory because of having a problem in equipment cost, productivity, safety and quality, and the thermal decomposition still occupies the main current.

As the thermal decomposition, Japanese Patent KOKAI 51-25507 discloses a method of removing binder organic components without inducing physical change by decomposing the components by the stepwise temperature elevation corresponding to the components. However, even in this method, unless debinding atmosphere is selected so that the reaction with binder and binder becomposed gas does not occur, it is impossible to shorten the debinding process sufficiently, because chemical reaction occurs and physical change cannot be avoided. Moreover, it is necessary to consider that, when a binder component which decomposes at a temperature not higher than injection molding temperature is selected among binder components, the binder content of molded bodies scatters in the molding process resulting in the occurrence of scattering of the sintered body size. In addition, it is also necessary to consider fluidized state preceding the decomposition of binder components, and to keep melted state for a long time must be avoided because of especially promoting deformation of debinded body.

As a dewaxing method which improves conventional thermal decomposition dewaxing method, Japanese Patent KOKOKU 61-48563 proposes a method of obtaining a dewaxed body without defects by using two or more kinds of binders having a different melting point, and introducing a process wherein a molded body is put on an absorber, and the lowest melting point binder is first fluidized by elevating temperature from ordinary temperature to be absorbed by the absorber. Besides, US-A-4,404,166 proposes a binder-removing method by elevating temperature up to not higher than the melting point of the highest melting point binder component for some time subsequent to the aforementioned process. DE-A-3 611 271 discloses the sequential removal of thermoplastic binders by stepwise heating to a temperature higher than the highest evaporation initiating temperature of the two binders in an inert atmosphere. However, the problem of these debinding methods is not only in that the time of the debinding process is too long, but also in that two points, i.e. dimensional stability in sintering and dewaxed shape retention, are infeior. That is, when the lowest melting point binder moves in a melted state on the inside of a molded body toward the absorber of the binder, particulate materials in a mixed state with the binder move in the gravity direction, i.e. the absorber direction resulting in the occurrence of density difference in the thickness direction at the finish of dewaxing. The density difference appears as the difference of contraction coefficient in the thickness direction at the finish of sintering process resulting in the occurrence of warpage in a sintered body. Moreover, since there is a limit to the rate of absorbing the low melting point binder component by the absorber, the melted low melting point binder component is enriched in the vicinity of a debinding plate to decrease the strength of the molded body sharply. As a result, in the case of a molded body having a recessed form on the contact face side, distinct deformation is formed by the self weight of a part at the finish of the debinding process. Besides, when the maximum temperature in the debinding process is stopped at not higher than the melting point of the highest melting point binder component, the highest melting point binder component is liable to remain to degrade occasionally the quality of a sintered body.

As mentioned above, it is difficult to obtain a sintered part satisfying dimensional accuracy by powder injection molding by applying the debinding method according to the prior art.

An object of the invention is to provide a method of manufacturing a powder injection molded part capable of resolving the form unstability of final parts which is a problem of the aforementioned prior art, satisfying dimensional accuracy, and shortening debinding time.

### Disclosure of Invention

The present invention provides a method of manufacturing a powder injection molded part which has achieved the above object. The invention is defined in claim 1. A preferred embodiment is defined in claim 2.

### Brief Description of Drawings

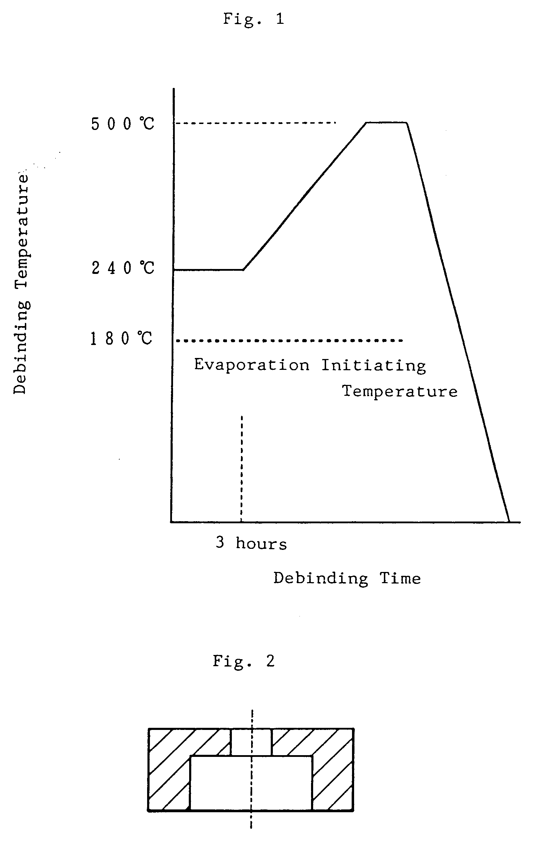

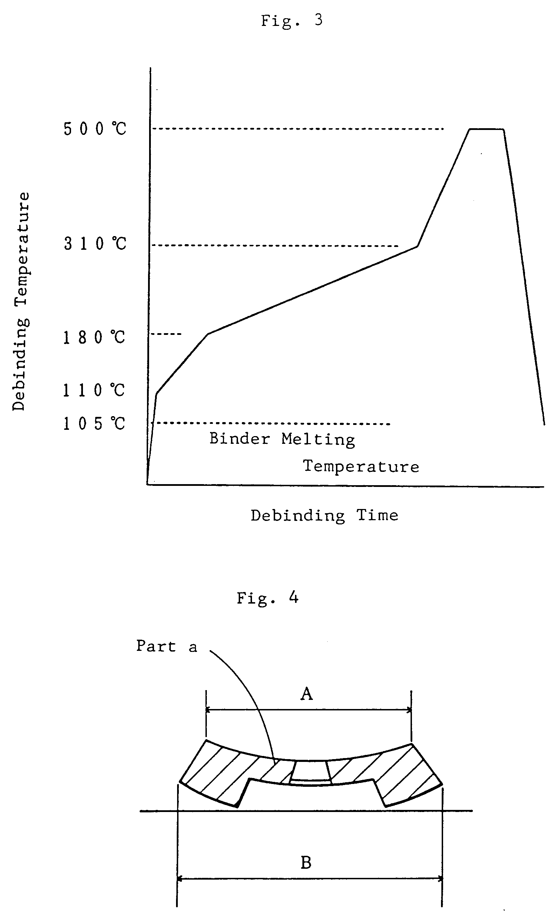

Figure 1 is a graph indicating debinding temperature change in the course of time applied in an example of the invention, and Figure 2 is a sectional view indicating a molded body used in this example. Figure 3 is a graph indicating debinding temperature change in the course of time applied in a comparative example, and Figure 4 is a sectional view indicating a deformed state of a molded body debinded in the comparative example.

### Best Mode for Carrying Out the Invention

The molded body to which the invention is applied is formed of powder, binder and additives which are optionally added.

The powder is powder of metal, ceramic or the like. The metal is Fe, an iron based alloy, such as Fe-Ni, Fe-Co, Fe-Si or Fe-Ni-Cr, a Co based alloy, such as Co-Fe-V, a W based alloy, such as W-Ni-Cu, a copper based alloy, such as Cu-Ni, Cu-Sn, Ti, a Ti based alloy, such as TiAl, a carbide based alloy, such as WC-Co, or the like, and the ceramic is an oxide based ceramic, such as alumina based, zirconia based, barium titanate based or calcium titanate based, a non-oxide ceramic, such as aluminum nitride, silicon nitride or silicon carbide based, ferrite or the like. The particle size of the powder is about 0.3 to 30 µm, preferably 0.5 to 20 µm, as the mean particle size.

The binder is composed of a composition containing at least 2 kinds of thermoplastic binders having an evaporation initiating temperature different from each other. The evaporation initiating temperature is the temperature of initiating a remarkable evaporation loss in the analytical method using a thermobalance. In the case that the binder is a polymer material, the evaporation occurs by thermal decomposition. Among respective binder components, a suitable evaporation initiating temperature of that having the lowest evaporation initiating temperature is about 150 to 280 °C, preferably about 180 to 220 °C, and a suitable evaporation initiating temperature of that having the highest evaporation initiating temperature is about 250 to 400 °C, preferably about 300 to 350 °C. The number of the binder components in the composition and the blending rate are set so that the removal of the binder is conducted continuously preferably at a constant speed according to the temperature rise in the debinding process. A suitable number of the binder components is about 2 to 5, preferably about 2 to 3. The blending rate of the binder components varies according to the complexity of form and size of the part, particle size and specific surface area of raw powder to be used, and is set so as to satisfy the elements of uniform moldability, debinding shape retention and the like, and accordingly, it cannot be prescribed equally. As the examples of the thermoplastic binder, there are paraffin wax, carnauba wax, montan wax, microcrystalline wax, polyethylene wax, alpha olefin wax, atactic polypropylene, ethylene-vinyl acetate copolymer, polyethylene, polypropylene, ethylene-acrylate copolymer, polystyrene, polyacrylate asters, polymethacrylate esters, polyamide, polyacetal, and the like.

As the additives which are optionally added, there are stearic acid, stearic amide as lubricant, and they can also function as the binder. As plasticizer, there are phthalate esters.

The blending ratio in an injection molded body is about 30 to 60 parts by volume of the binder per 100 parts by volume of the powder, and a minimum binder amount is desirable which satisfies the quality in the injection molding process. The amount of the additives which are optionally added is about 0 to 10 parts by volume.

When the injection molded body is debinded, the temperature of the molded body is elevated rapidly up to above the evaporation initiating temperature of the binder component having the lowest evaporation initiating temperature. As the temperature, a suitable temperature is not lower than the above evaporation initiating temperature and not higher than the evaporation initiating temperature of the binder component having the second lowest evaporation initiating temperature. The temperature rise speed up to this temperature may be any speed not giving damage to the injection molded body, and in usual, temperature may be elevated without consideration especially.

Then, the binder component having the lowest evaporation initiating temperature is removed from the molded body by keeping this temperature. The temperature to be kept is not necessary to be constant but may be present in the above temperature range. In the case that there are 3 or more kinds of the binder components, the method of evaporating 2 kinds of the binder components among them at first is included in the method of the invention. in this case, the temperature to be kept is set at not lower than the evaporation initiating temperature of the binder component having the second lowest evaporation initiating temperature and not higher than the evporation initiating temperature of the binder component having the third lowest evaporation initiating temperature.

By elevating the temperature of the injection molded body rapidly up to immediate above the evaporation initiating temperature of the binder having the lowest evaporation initiating temprature and then keeping this temperature, the lowest evaporation initiating binder is evaporated to remove from the surface of the molded body without moving in the dewaxing plate direction. By shortening the time staying in a melted state prior to initiate evaporation, the migration of powder particles becomes extremely small, and scattering of density difference formed in the thickness direction can be prevented. Besides, it is also included in the invention to elevate temperature gently up to the remarkable evaporation temperature of the binder having the second lowest evaporation initiating temperature from the lowest evaporation temperature instead of the keeping.

Subsequently, the debinding temperature is further elevated to remove residual all binder components. The temperature elevating speed is a speed not generating cracks or blisters in the molded body, and it varies according to the kind and quantity of binder components, particle size of powder, form, size of the molded body and the like, and in usual, temperature elevation of about 5 to 50 °C/hour is possible. The temperature elevation may be continuous or stepwise. In the latter case, it is possible set so that evaporation of each binder component is finished in sequence of lower evaporation initiating temperature.

It is preferable that the above debinding process is conducted as endothermic reaction in an atmosphere inactive to both of the binder components and thermal decomposition products thereof. As such an atmosphere, a gas atmosphere inactive to the binder in the debinding temperature region, such as nitrogen gas, helium, hydrogen or argon can be used. In so far as conducting the rapid temperature elevation up to immediate above the evaporation initiating temperature of the binder and keeping in a gas atmosphere inactive to the binder, defects, such as blisters and cracks do not occur in the molded body. However, when debinding is conducted in an oxidizing atmosphere, heat generates from the surface of the molded body by the oxidation reaction of the binder and binder decomposition products to form defects on the inside. Accordingly, in the debinding method conducted in an oxidizing atmosphere, heat generation occurs by the oxidation of the binder. As a means for avoiding the occurrence of defects by heat generation, although the method disclosed in Japanese Patent KOKOKU 61-48563 is effective, the effect on shortening time satisfactoryly is small.

After debinding, sintering is conducted according to a known method to obtain a sintered body.

### Example

To 100 parts by weight of calcium titanate powder (CaO/TiO₂=0.63) having a mean particle size of 0.9 µm and a specific surface area of 4.5 m²/g, 21.0 parts by weight of the binder shown in Table 1 was added. After kneading by a kneader with pressure at 150 °C, compound for injection molding was prepared by a granulating machine. The composition of the binder is as follows:

| | |
|---|---|
| Low density polyethylene | 42 wt. % |
| Atactic polyolefin | 12 wt. % |
| Ethylene-vinyl acetate copolymer | 36 wt. % |
| Polystyrene | 10 wt. % |

**Table 1**

| | Evaporation (decomposition) loss initiating temperature in nitrogen atmosphere |
|---|---|
| Low density polyethylene | 180 °C |
| Atactic polyolefin | 240 °C |
| Ethylene-vinil acetate copolymer | 300 °C |
| Polystyrene | 320 °C |

Using the above compound, a disc-formed molded body shown in Figure 2 was prepared at an injection molding temperature of 135°C. The molded body has a size of 15 mm in diameter and 5 mm in height, and has a form of short pipe of which the top is closed by a disc. The thickness of the short pipe portion is 4 mm, and a circular hole 5 mm in diameter is provided at the center of the disc. The molded body was put on an alumina plate having a relative density of 95 %, and put in a debinding furnace previously heated at 240 °C, by considering the evaporation condition of low density polyethylene having the lowest evaporation temperature in the binder and the evaporation condition of atactic polyolefin which is next decomposed to evaporate from the molded body. Since it was comfirmed tnat 100 % of low density polyethylene in the molded body had been removed by keeping at 240°C for 2.5 hours, temperature was elevated to 500°C for 13 hours. After confirming that the binder in the molded body became 99.5 % by keeping at 500°C for 2 hours, it was cooled rapidly to room temperature. Although the size of the debinded body was contracted by 0.2%, defects such as cracks and blisters did not occur. The deformation in the diameter direction (difference in size in X-Y direction) was not more than 10 µm. The interface of the plate and the debinded body was normal, and defects such as collapse of the molded body could not been found. The debinded body was transferred to an oxidizing atmosphere furnace, and sintered at 1290°C for 2 hours. The density of the sintered body was 3.98, and the linear contraction coefficient was 18.7 %. Deformation was very small, and there was no scattering in each size.

### Comparative Example

The molded body used in the examle was, as shown in Figure 3, rapidly heated from room temperature up to immediate above the temperature of 105 °C, which was a softening point of low density polyethylene examined by thermal enalysis, for 0.5 hour, temperature was elevated to the evaporation temperature of 180 °C for 2 hours, and temperature was elevated from 180 °C to 310 °C immediate under the evaporation temperature of the binder having the highest evaporation temperature. The dewaxed rate up to this step was low, i.e. 88 %, and the occurrence of defects during sintering was anxious. Accordingly, temperature was elevated to 500°C for 5 hours and kept for 2 hours. As a result, the dewaxed rate became 99 %. The debinded body was observed in detail, and found a sag deformation in the gravity direction at part a in Figure 4. The interface of the plate and the debinded body was swelled, and adhesion of calcium titanate powder to the plate was found. The debinded body was sintered in the method similar to Example. As a result, sintered density was satisfied, and defects such as cracks and blisters did not occur. However, the warpage deformation shown in Figure 4 occurred which did not appear in the debinded state.

As a result of measuring size, it was found by the measurement of A, B sizes that the contraction coefficient was different between the contact face with the plate and the non-contact face.

### Industrial Applicability

The powder injection molded part obtained in the method of the invention can be applied widely to metal, cermet, and ceramic products.

## Claims

1. A method of manufacturing a powder injection molded part which comprises, using a binder composition comprising at least 2 kinds of thermoplastic binder components having an evaporation temperature higher than the injection molding temperature and a different evaporation initiating temperature from each other, elevating the temperature of a molded body above the evaporation initiating temperature of the binder component having the lowest evaporation initiating temperature which is in the range of 150 to 280°C rapidly in a debinding furnace which has been heated to above the evaporation initiating temperature of the binder component having the lowest evaporation initiating temperature previously, by removing the binder component having the lowest evaporation initiating-temperature from the molded body through thermal decomposition thereof being conducted as endothermic reaction in an atmosphere inactive to all of the binder components and thermal decomposition products thereof by keeping this temperature, and thereafter, removing all binder components by elevating up to a temperature not lower than the evaporation initiating temperature of the binder component having the highest evaporation initiating temperature which is in the range of 250 to 400°C.

2. The method of claim 1 wherein the highest evaporation initiating temperature is 300 to 350°C.

## Patentansprüche

1. Verfahren zur Herstellung von durch Pulverspritzgießen gebildeten Formteilen, umfassend die Verwendung eines Bindemittels, umfassend mindestens zwei Arten von thermoplastischen Bindemittelkomponenten mit einer höheren Verdampfungstemperatur als die Spritzgußverformungstemperatur und mit voneinander unterschiedlichen, die Verdampfung initiierenden Temperaturen, die rasche Erhöhung der Temperatur der Formkörper auf oberhalb die Verdampfung initiierenden Temperatur der Bindemittelkomponente mit der niedrigsten, die Verdampfung initiierenden Temperatur, die im Bereich von 150 bis 280°C liegt, in einem Bindemittelentfernungsofen, der zuvor auf oberhalb die die Verdampfung initiierende Temperatur der Bindemittelkomponente mit der niedrigsten, die Verdampfung initiierenden Temperatur erhitzt worden ist, durch Entfernung der Bindemittelkomponente mit der niedrigsten, die Verdampfung initiierenden Temperatur von dem Formkörper durch thermische Zersetzung davon, die als endotherme Reaktion in einer gegenüber allen Bindemittelkomponenten und der thermischen Zersetzungsprodukte davon inaktiven Atmosphäre durchgeführt wird, indem diese Temperatur gehalten wird, und danach erfolgende Entfernung aller Bindemittelkomponenten durch Erhitzen auf eine Temperatur, die nicht niedriger ist als die die Verdampfung initiierende Temperatur der Bindemittelkomponente mit der höchsten, die Verdampfung initiierende Temperatur im Bereich von 250 bis 400°C liegt.

2. Verfahren nach Anspruch 1, dadurch **gekennzeichnet,** daß die höchste, die Verdampfung initiierende Temperatur 300 bis 350°C ist.

## Revendications

1. Procédé de fabrication d'une pièce moulée par injection de poudre qui comprend
l'utilisation d'une composition liante contenant au moins 2 sortes de composants liants thermoplastiques ayant une température d'évaporation plus élevée que la température de moulage et chacun une température d'évaporation commençante différente de celle de l'autre,
l'élévation de la température d'un corps moulé au dessus de la température d'évaporation commençante du composant liant ayant la température d'évaporation commençante la plus basse, laquelle est comprise entre 150°C et 280°C, et ce d'une manière rapide, dans un four 〈〈 destructeur de liaison 〉〉 qui a été chauffé au préalable au dessus de la température d'évaporation commençante du composant liant ayant la température d'évaporation commençante la plus basse, en éliminant du corps moulé le composant liant ayant la température d'évaporation commençante la plus basse, par une décomposition thermique de ce dernier conduite comme une réaction endothermique en atmosphère inerte vis-a-vis de tous les composants liants et de tous leurs produits de décomposition thermique en maintenant cette température, et après cela
l'élimination de tous les composants liants par élévation de la température jusqu'à une température non inférieure à la température d'évaporation commençante du composant liant ayant la température d'évaporation commençante la plus élevée laquelle est comprise entre 250°C et 400°C.

2. Procédé selon la revendication 1, dans lequel la température d'évaporation commençante la plus élevée est comprise entre 300°C et 350°C.
